# EUROPEAN PATENT APPLICATION

(11) **EP 3 422 556 A1**
(43) Date of publication of application: **02.01.2019**
(21) Application number: 18180147.3
(22) Date of filing: 27.06.2018
(51) Int. Cl.: H02P 3/12, H02J 7/00, H02P 6/24

(54) **ENERGY RECYCLE ON POWER TOOLS**

(30) Priority: 27.06.2017 CN 201710499609
(71) Applicant: TTI (Macao Commercial Offshore) Limited, Macao (MO)
(72) Inventor: Xie, Li Hua, Dongguan City (CN); Li, Yong Min, Dongguan City (CN)
(74) Representative: Stevenson-Hill, Jack Patrick

(57) **Abstract**

A power tool with an energy recovery function including a casing, a brushless motor located within the casing, a battery pack connected to the casing, and a switching circuit. The brushless motor is used for driving a working part. The battery pack is connected to the brushless motor via the switching circuit. The switching circuit is configured to allow a first part of the braking energy from the brushless motor to be recovered to the battery pack by controlling on/off of the switching circuit when the brushless motor tends to be stopped during rotation. When the controller of the power tool detects a need to decelerate/stop the motor, the service time of the battery is prolonged by recharging a part of the energy back to the battery through controlling the circuit dynamic and adjusting the on/off duty cycle of the circuit.

## Description

### Technical Field

The present invention relates to a power supply device for a handheld power tool, and in particular to a power supply system for a power tool which has a energy saving function.

### Background art

At present, handheld power tools usually adopt brushless direct current motors (BLDC) as the power source, because it has a smaller volume, provides a more efficient output, and possesses a better reliability and service life over brushed motors. Three-phase brushless direct current motor is the most typical brushless motor type. To keep the normal operation of the brushless motor under control, a motor controller is used to generate a corresponding pulse width modulation (PWM) control signal which has a frequency much higher than the rotational speed of the motor to control the motor to rotate continuously, according to the position of the rotor (for example, by using a Hall element or an optical encoder).

However, in traditional brushless direct current motors, the rotor of the motor does not stop rotation immediately after the PWM signal from the motor controller is ceased. To the contrary, the rotor will continue to rotate due to inertia. However, since the coils on the stator is not excited by currents from the motor controller at this time, the continuous rotation of the rotor will be hindered due to the variation of the electromagnetic field, and kinetic energy of the rotor rotation is gradually transformed to heat and dissipated due to the hindrance. Such heat means that the residual mechanical kinetic energy cannot be recovered and recycled when the motor stops rotation.

### Summary of the invention

Therefore, embodiments in the present invention provide an improved power tool which can overcome or at least reduce the above-mentioned technical problem.

In one aspect of the present invention, there is provided a power tool with an energy recovery function. The power tool includes a casing; a brushless motor located within the casing and used for driving a working part; a battery pack connected to the casing; and a switching circuit. The battery pack is connected to the brushless motor through the switching circuit. The switching circuit is configured to allow a first part of a braking energy from the brushless motor to be recovered to the battery pack by controlling the on/off of the switching circuit when the brushless motor tends to be stopped during rotation.

The power tool may further contain a controller connected to the switching circuit so as to control the on/off of the switching circuit.

The controller may also control the on/off duty cycle of the switching circuit so as to allow the first part of the braking energy to be recovered to the battery pack in a form no higher than the maximum permissible voltage or current.

The controller may control the on/off of the switching circuit through the pulse width modulation signal.

A second part of the braking energy in the brushless motor may be dissipated in a form of heat by the controller controlling the duty cycle.

The switching circuit may contain six switching elements.

The brushless motor may be a three-phase motor, each phase of which may be connected to the positive and negative electrodes of the battery pack respectively through two switching elements.

The switching elements may be MOSFETs or IGBTs.

The battery pack may be removably mounted to the casing.

The present invention therefore recovers part of the energy back to the battery pack when the power tool decelerates / stops working by the controller controlling the switching circuit. As a result, the present invention achieves a supplement to the power of the battery pack, which prolongs the service time of the battery. Meanwhile, because pf the energy recovery which equals to conducting an active braking on the motor, the time between when the motor starts to decelerate and it totally stops is shortened, which reduces the waiting time of the user. In addition, the possibility that user is hurt by the still-rotating working part (such as a drill) during the above time period is reduced.

### Description of the drawings

The properties and advantages of the present invention can be further understood by referring the remained part of the specification and drawings. The marker numbers for an identical component in the drawings are the same. Under certain circumstances, a sub-marker is placed behind a certain maker and hyphen so as to represent one of many similar components. When a marker number is mentioned without specifying any existed sub-marker, it means for all these similar components.
Fig. 1 shows an illustration of an appearance of the power tool according to one embodiment of the present invention.
Fig. 2 shows a schematic diagram of the circuit connection inside the power tool according to another embodiment of the present invention.

### Detailed Description of Preferred Embodiments

Embodiments in the present invention utilize a controlled switching circuit to achieve the recovery of kinetic energy back to an electric energy during the motor braking. Other different merits and advantages provided in each embodiments of the present invention can be easily understood from the following description.

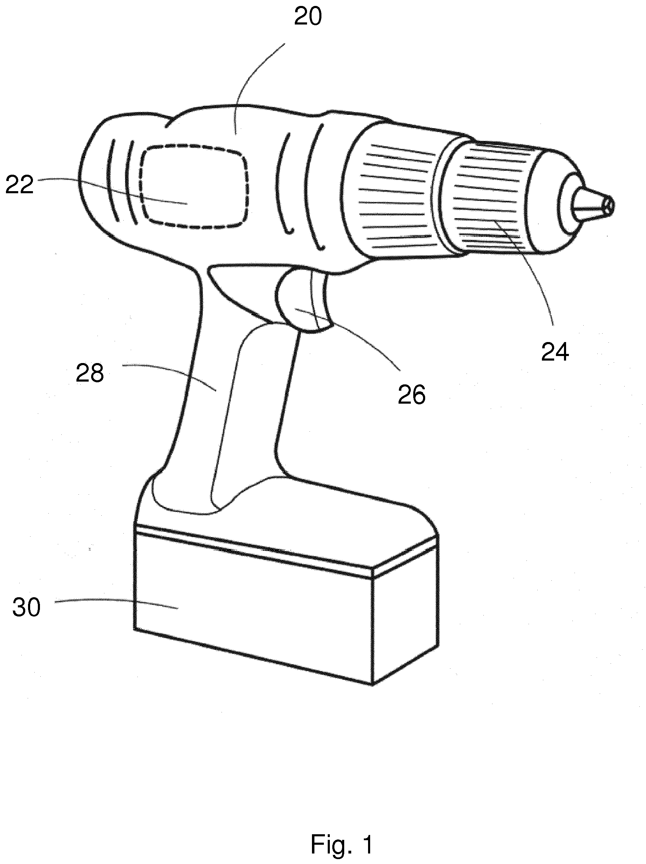

Now refer to Fig. 1. As shown in Fig.1, the first embodiment of the present invention is an power tool designed as a handheld type. The power tool includes a casing including a body portion 20, a handle portion 28, and a driving motor 22 mounted within the body portion 20. The driving motor 22 is configured to drive one or more working part in the power tool, such as the middle gear mechanism (not shown) and the final tool head holder 24. The body portion 20 substantially extends along the axis direction defined by the motor axis (not shown) of the driving motor 22. The handle portion 28 is connected in a way that it extends along the direction substantially downward from the body portion 20 and inclines from the vertical direction perpendicular to the axis direction. A trigger is configured on the handle portion 28 and exposed to the exterior environment, which is used to operate so as to open/close the power tool. There is a battery pack 30 in the bottom of the handle portion 28 and it is removably connected to the power tool to power the circuit within the power tool. The battery pack 30 can be of lithium ion type or a lithium type.

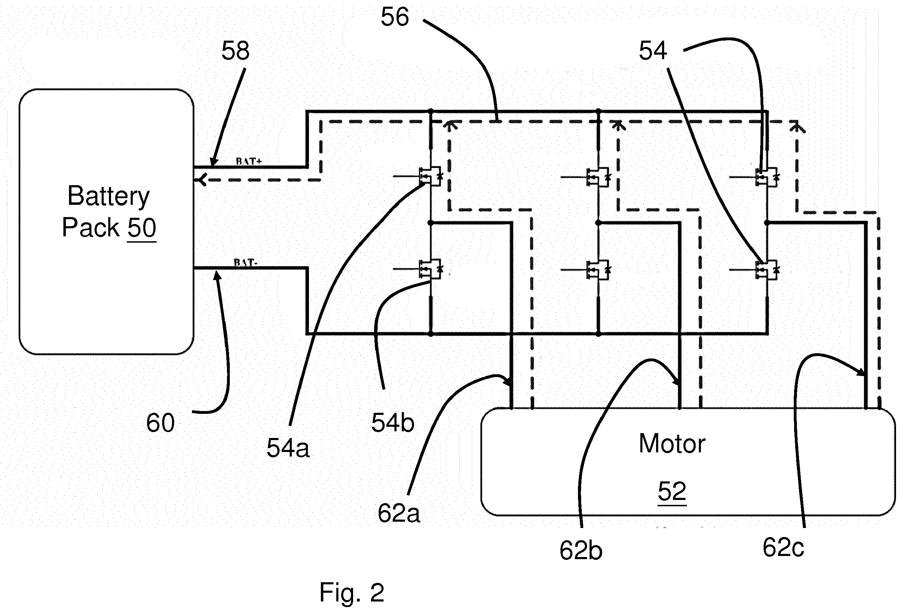

Fig.2 shows the internal structure of the power tool according to another embodiment of the present invention. This power tool has parts similar to the power tool shown in the above Fig. 1, and includes a battery pack, a motor, a casing and a working part etc., which are not described in details again herein. As shown in Fig. 2, the battery pack 50 in this embodiment is connected to the three phase brushless motor 52 through the switching circuit. This switching circuit contains six Metal-Oxide-Semiconductor Field-Effect Transistor (MOSFET) 54 acting as the switching elements. These MOSFET 54 are divided into three groups, each of which including two MOSFETs 54 connecting to one phase of the motor 52 to the positive terminal 58 and the negative terminal 60 of the battery pack 50 respectively. For example, MOSFET 54a shown in Fig. 2 connects the positive terminal 58 of the battery pack 50 to the first phase input terminal 62a of the motor 52, while MOSFET 54b connects the negative terminal 60 of the battery pack 50 to the first phase input terminal 62a of the motor 52. It should be noted that a MOSFET itself does not enable the input terminal of the motor and the terminal of the battery pack to be connected always, but rather this is determined depending on the signal received from the controller at the grid of MOSFET. Here the so called controller (not shown) is the motor controller as a part of the power tool, which controls the on/off of the switching circuit to enable the motor 52 to normally work. The controller, for example, can be arranged in a form of PCB circuit board.

During operation, if the motor is in an accelerated state (for example, the stage from the stationary status to the start of rotation, and gradually accelerating to the desired rotation speed), the controller uses the signal of pulse width modular (PWM) to control MOSFET 54. Through the PWM signal, the stator windings in the three phase of the motor 502 is successively powered up by a certain order, i.e. the so called reversing, and the controller determines the position of the rotor based on devices such as the Hall elements so as to determine the optimum reversing moment. Operations of such brushless motors are known to persons skilled in the art, which will not be described in details herein.

When the controller of the power tool detects a need to decelerate/stop the motor 52 (for example, the users releases the trigger, sets the output speed in a low level, or sets the output torque in a high level etc.), the controller will dynamically adjust the on/off duty cycle of the switching circuit through the switching circuit. Specifically, when the motor 52 needs to stop or decelerate to produce a tendency to stop its rotation, the rotor will not stop rotation or decelerate to the desired speed immediately. On the contrary, the rotor will continue to rotate due to inertia. However, the coil on the stator is not excited by the current from the controller. Therefore, the continuous rotation of the rotor will cause the motor 52 to enter the power generation mode, which means the interactive inductance of the rotor and the stator will result in the generation of a current in the stator coil.

Meanwhile, when the motor 52 needs to be stopped or decelerated, the controller still causes an intermittent on/off of the switching circuit, allowing the electric energy produced in the stator coil of the motor 52 to selectively enter the battery pack 50 through the switching circuit and recharge the battery pack 50. Specifically speaking, the arrow 56 in Fig. 2 shows the flowing direction of the electric energy in the motor 52 braking mode. According to the position (for example, as detected by the Hall sensor) of the rotor in relative to the stator in the motor 52, the switching circuit in the braking state connects the first phase input terminal 62a to the positive terminal 58 of the battery pack 50, connects the second phase input terminal 62b of the motor 52 to the positive terminal 58 of the battery pack 50 and connects the third phase input terminal 62c of the motor to the positive terminal 58 of the battery pack 50 successively through MOSFETs 54. Such energy flowing path is exactly opposite to the energy flowing path of the motor under states such as normal operation, starting and acceleration, which enables the battery pack 50 to be charged.

However, when the motor 52 is in a braking state, the controller will not keep a certain MOSFET 54 to be on during the entirety of its corresponding sub-period (for example, a 120° angular range of the motor's rotation) but rather is connected within a part of the period, and such connection time proportion is the so called duty cycle. The purpose for the controller controlling the connection period the switching circuit under the braking state through the duty cycle is that the recovered electric energy will not go beyond an acceptable scope for the battery pack 50 to be charged, including the maximum allowable charging voltage or current etc. If the duty cycle is not controlled and MOSFET 54 is switched on during the entire sub-period, excessive recovery current or voltage may be produced, which will damage the battery pack 50. By controlling the duty cycle, one part of the braking energy produced by the motor will be recovered and charge the battery pack, while other part of the braking energy needs to be dissipated as heat.

Therefore, by introducing several embodiments, a person skilled in the art can recognize that different modifications, other structures and equivalents can all be used without departing from the nature of the present invention. Correspondingly, the above-mentioned description shall not be deemed as limitations to the scope of the present invention determined by the following claims.

For example, the switching elements configured in the switching circuit in the above-mentioned embodiment is MOSFET. However, a person skilled in the art can understand that IGBT (Insulated Gate Bipolar Transistor) may also be used as the switching elements according to the power and/or the output of the battery pack in the motor.

## Claims

1. A power tool serving the energy recover function, comprising:
a casing;
a brushless motor located within the casing and used for driving a working part;
a battery pack connected to the casing; and
a switching circuit;
wherein the battery pack is connected to the brushless motor through the switching circuit; the switching circuit configured to allow a first part of a braking energy from the brushless motor to be recovered to the battery pack by controlling on/off of the switching circuit when the brushless motor tends to be stopped during rotation.

2. The power tool according claim 1, further comprises a controller connected to the switching circuit so as to control the on/off of the switching circuit; the controller further controlling a duty cycle of the on/off of the switching circuit so as to allow the first part of the braking energy to be recovered to the battery pack in a form no higher than the maximum permitted voltage or current.

3. The power tool according claim 2, wherein the controller controls the on/off of the switching circuit through a pulse width modulation signal.

4. The power tool according claim 2, wherein a second part of the braking energy in the brushless motor is dissipated in a form of heat by the controller controlling the duty cycle.

5. The power tool according to any one of claims 2-4, wherein the switching circuit comprises six switching elements; the brushless motor being a three-phase motor, each phase of which being connected to positive and negative electrodes of the battery pack respectively through two said switching elements.

6. The power tool according claim 5, wherein the switching elements are MOSFETs or IGBTs.

7. The power tool according to anyone of claims 1-6, wherein the battery pack is removably mounted to the casing.
